# FASCICULE DE BREVET EUROPEEN

(11) **EP 4 342 018 B1**
(45) Date de publication et mention de la délivrance du brevet: **29.01.2025**
(21) Numéro de dépôt: 22729544.1
(22) Date de dépôt: 16.05.2022
(51) Int. Cl.: H01M 10/0585, H01M 50/103, H01M 50/105, H01M 50/174, H01M 50/176, H01M 50/178, H01M 50/533, H01M 50/54, H01M 50/547, H01M 50/55, H01M 50/553

(54) **ELÉMENT ÉLECTROCHIMIQUE POUR BATTERIE, ET BATTERIE CORRESPONDANTE**
ELEKTROCHEMISCHES ELEMENT FÜR EINE BATTERIE UND ENTSPRECHENDE BATTERIE
ELECTROCHEMICAL ELEMENT FOR A BATTERY, AND CORRESPONDING BATTERY

(30) Priorité: 18.05.2021 FR 2105171
(43) Date de publication de la demande: 27.03.2024
(73) Titulaire: SAFT, 92300 Levallois-Perret (FR)
(72) Inventeur: BEUGNON, Alexandre, 33290 LE PIAN MEDOC (FR); BLONZ, Valentin, 33110 LE BOUSCAT (FR)
(74) Mandataire: Lavoix
(86) Numéro de dépôt international: PCT/EP2022/063189
(87) Numéro de publication internationale: WO 2022/243243

(56) Documents cités:
- WO-A1-03/026042
- WO-A1-2012/057854
- US-A- 5 419 982

## Description

La présente invention concerne un élément électrochimique pour batterie, du type comprenant
- une première électrode d'une première polarité,
- un premier organe de connexion de la première polarité,
- une seconde électrode d'une seconde polarité,
- un second organe de connexion de la seconde polarité,

- une enveloppe comprenant une première paroi et une seconde paroi,
- l'enveloppe comprenant au moins un premier bord et au moins un second bord,
le(s) premier(s) et second(s) bords formant une forme géométrique enveloppante ayant au moins un coin.

On connait des éléments électrochimiques et des batteries de WO95/16283. L'élément électrochimique divulgué par ce document comprend des languettes de connexion agencées dans les coins de l'élément électrochimique.

La batterie fabriquée à partir des éléments électrochimiques comprend une enveloppe en matière plastique. L'élément électrochimique de ce document est utilisé pour fabriquer des batteries parallélépipédiques.

D'autres ensembles électrochimiques ou batteries électrochimiques sont connus de CN108400385 ; WO2016/205663A1 (EP3311443) ; KR20160041402A ; US10490781B2 (US20150364729A) : CN202373667U ; US2013101891A1 ; WO2012057854A1 ; WO2005039013A2 (EP1678804) ; WO03026042A1 (EP1428272); US5419982 A; et WO9120100A1 (EP0487699).

L'invention a pour but de proposer un élément électrochimique qui ait une capacité de stockage d'énergie électrique importante pour un volume donné. Par ailleurs, l'élément électrochimique devrait être facile et économique à fabriquer et avoir une sécurité de fonctionnement importante.

A cet effet, l'invention a pour objet un élément électrochimique pour batterie précité, caractérisé en ce que le premier organe de connexion de la première polarité et le second organe de connexion de la seconde polarité sont disposés entièrement à l'intérieur de la forme géométrique enveloppante, en ce que
le premier organe de connexion de la première polarité est disposé dans un premier coin de la forme géométrique enveloppante et
le second organe de connexion de la seconde polarité est disposé également dans le premier coin de la forme géométrique enveloppante.

Selon des modes de réalisation particuliers de l'élément électrochimique pour batterie, celui-ci peut comporter l'une ou plusieurs des caractéristiques suivantes :
- La forme géométrique enveloppante est un quadrilatère enveloppant, notamment un rectangle ou un trapèze.
- Exclusivement dans un seul coin de la forme géométrique enveloppante est disposé un organe de connexion de la première polarité et est disposé un organe de connexion de la seconde polarité et dans aucun autre coin éventuellement présent de la forme géométrique enveloppante est disposé un organe de connexion de l'élément électrochimique.
- Le premier organe de connexion de la première polarité et le second organe de connexion de la seconde polarité sont disposés côte-à-côte ou le premier organe de connexion de la première polarité et le second organe de connexion de la seconde polarité sont juxtaposés.
- Le premier organe de connexion de la première polarité comporte une portion de borne et/ou dans lequel le second organe de connexion de la seconde polarité comporte une portion de borne, dans lequel chaque portion de borne est adaptée à être connectée électriquement à une borne associée et dans lequel chaque portion de borne à une forme sensiblement triangulaire.
- L'élément électrochimique comprend un élément de liaison en matière plastique qui maintient le premier organe de connexion de la première polarité et le second organe de connexion de la seconde polarité ensemble dans une configuration déterminée et qui isole électriquement le premier organe de connexion de la première polarité du second organe de connexion de la seconde polarité.
- L'élément de liaison est surmoulé autour du premier organe de connexion de la première polarité et du second organe de connexion de la seconde polarité.
- Le premier organe de connexion de la première polarité et/ou le second organe de connexion de la seconde polarité est ou sont fixés à leur électrode respective notamment par soudage par ultrasons.
- La première paroi et la seconde paroi comprennent chacune une feuille de base en métal et dans lequel les feuilles de base en métal ont chacune une épaisseur comprise entre 20 µm et 150 µm, notamment soit entre 30 µm et 60 µm soit entre 60 µm et 100 µm ou entre 60 µm et 90 µm.

L'invention a en outre pour objet une batterie comprenant un carter et au moins un élément électrochimique, la batterie comprenant de préférence une première borne et une seconde borne, caractérisée en ce que l'au moins un élément électrochimique (10) est un élément tel que défini ci-dessus, et en ce que de préférence le premier organe de connexion de la première polarité est relié électriquement à la première borne et le second organe de connexion de la seconde polarité est relié électriquement à la seconde borne.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue schématique de face d'une batterie comprenant un élément électrochimique selon un premier mode de réalisation de l'invention;
**[****Fig 2****]** La Figure 2 est une vue de face de l'élément électrochimique de la Figure 1, une paroi de l'enveloppe étant omise ;
**[****Fig 3****]** La Figure 3 est une vue schématique en coupe de l'élément électrochimique de la Figure 1 ;
**[****Fig 4****]** La Figure 4 est une vue agrandie d'un détail de l'élément électrochimique de la Figure 1 ;
**[****Fig 5****]** La Figure 5 est une vue agrandie d'un détail de la Figure 2 ;
**[****Fig 6****]** La Figure 6 est une vue en perspective d'un ensemble de connexion d'un élément électrochimique des Figures 1 à 5, l'ensemble de connexion étant selon un premier mode de réalisation ;
**[****Fig 7****]** La Figure 7 est une vue de plan de l'ensemble de connexion de la Figure 6,
**[****Fig 8****]** La Figure 8 est une vue de face de l'ensemble de connexion de la Figure 6 ;
**[****Fig 9****]** La Figure 9 est une vue en perspective d'un ensemble de connexion selon un second mode de réalisation, la vue étant identique à celle de la Figure 6 ;
**[****Fig 10****]** La Figure 10 est une vue de plan de l'ensemble de connexion de la Figure 9,
**[****Fig 11****]** La Figure 11 est une vue de face de l'ensemble de connexion de la Figure 9 ;
**[****Fig 12****]** La Figure 12 est une vue de côté de l'ensemble de connexion de la Figure 9 ; et
**[****Fig 13****]** La Figure 13 est une vue en perspective de l'ensemble de connexion selon un troisième mode de réalisation, la vue étant identique à celle de la Figure 6.

La description qui suit contient des caractéristiques techniques de l'invention. Ces caractéristiques techniques, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

Dans la description des différents modes de réalisation, les éléments analogues portent les mêmes références. Également, sauf indication contraire, chaque caractéristique décrite en référence à un mode de réalisation de l'invention ou à une variante d'un mode de réalisation est applicable d'une manière isolée ou en toute combinaison techniquement possible aux autres modes de réalisation ou variantes.

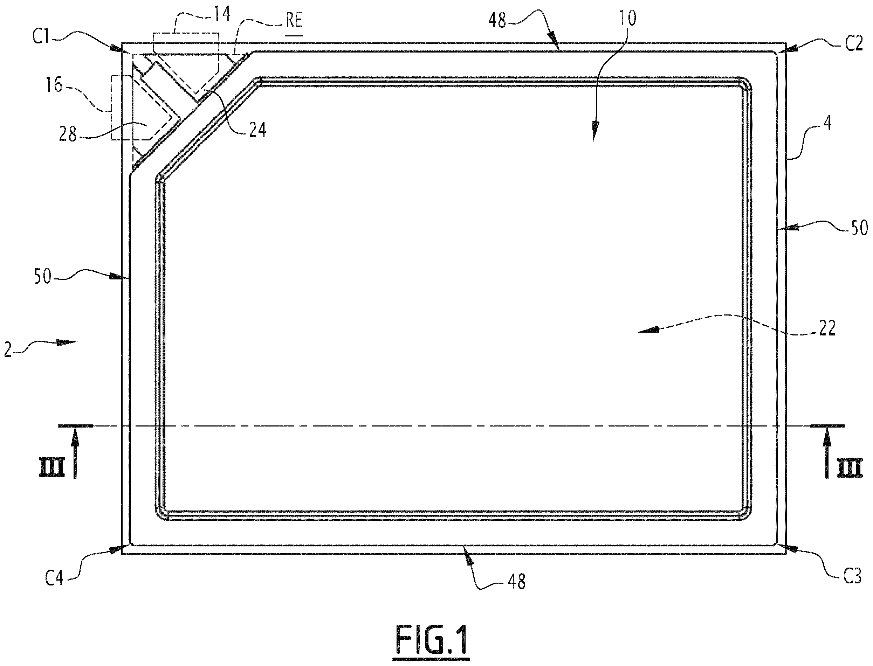

Sur la Figure 1 est représentée une batterie selon un premier mode de réalisation de l'invention, désignée par la référence générale 2. La batterie 2 est une batterie électrochimique telle qu'utilisée habituellement dans les véhicules électriques. Toutefois, d'autres domaines d'application de la batterie 2 sont envisageables, tels que le stockage d'énergie, la mobilité électrique, l'aviation, le ferroviaire.

La batterie 2 comprend un carter 4 ou conteneur et au moins un élément électrochimique 10. En pratique, la batterie 2 comprend plusieurs éléments électrochimiques 10 connectés en série ou en parallèle afin d'obtenir la tension électrique et/ou la capacité souhaitées. L'élément électrochimique 10 est disposé dans le carter 4.

Le carter 4 est par exemple de forme parallélépipédique, en particulier rectangle, et comprend des parois de carter, une première borne 14 et une seconde borne 16. Les parois de carter sont plus rigides que les parois de l'élément électrochimique 10 (voir ci-après).

La batterie 2 peut comprendre un dispositif de refroidissement, qui n'est pas représenté.

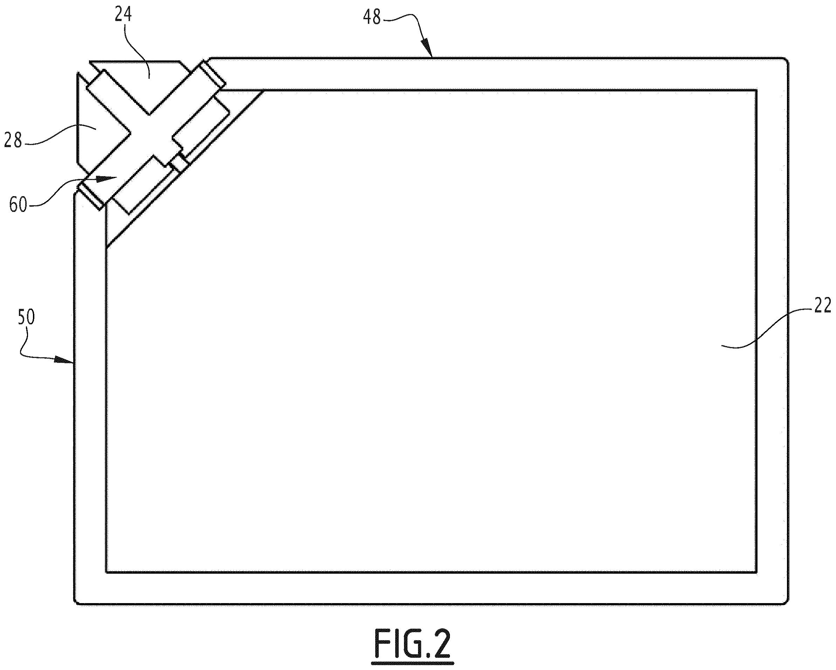

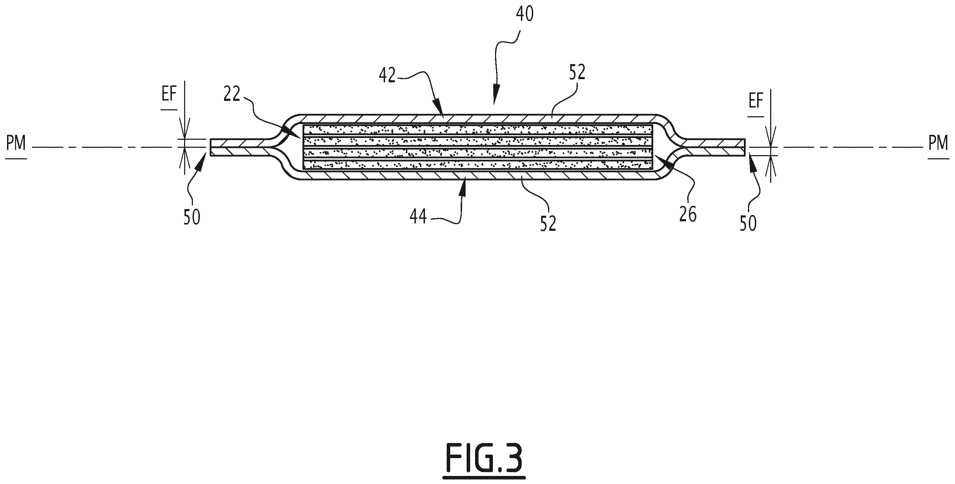

L'élément électrochimique 10 ou chaque élément électrochimique 10 s'étend selon un plan médian PM (voir Figure 3), qui est parallèle au plan des Figures 1 et 2 et perpendiculaire au plan de la Figure 3.

L'élément électrochimique 10 ou chaque élément électrochimique 10 comprend une première électrode d'une première polarité 22, un premier organe de connexion de la première polarité 24, une seconde électrode d'une seconde polarité 26, et un second organe de connexion de la seconde polarité 28.

L'élément électrochimique 10 est par exemple du type Lithium-Ion. La première électrode de la première polarité 22 comprend au moins un collecteur de courant formé d'un feuillard métallique par exemple en aluminium, revêtu sur au moins une face d'un mélange contenant le matériau actif. Par exemple, dans le cas d'une batterie secondaire au lithium, la première électrode de la première polarité contient un matériau actif qui peut être un oxyde métallique comprenant des atomes de lithium, tel que le dioxyde de cobalt et de lithium LCO (LiCoO₂), NMC (LiNixMnyCo_{1-x-y}O₂), NCA (LiNixCoyAl_{1-x-y}O₂), les composés de type LiMPO₄ où M est choisi dans le groupe comprenant Fe, Co, Ni, Mn et un mélange de ceux-ci (par exemple LiFePO₄), LMO (LiMn₂O₄), les composés de type LiₓFe₁₋yM_{y}PO₄ où M est choisi dans le groupe consistant en B, Mg, AI, Si, Ca, Ti, V, Cr, Mn, Co, Ni, Cu, Zn, Y, Zr, Nb et Mo et 0,8≤x≤1,2 ; 0≤y≤0,6 (par exemple LiMnFePO₄), les composés de type LiVPO₄Fou des composés lithiés analogues. La première électrode de la première polarité 22 est par exemple l'électrode positive.

La seconde électrode de la seconde polarité 26 comprend au moins un collecteur de courant formé d'un feuillard métallique, par exemple en cuivre, revêtu sur au moins une face d'un mélange contenant le matériau actif. Par exemple, dans le cas d'une batterie secondaire au lithium, la seconde électrode contient un matériau actif qui peut être un matériau carboné apte à insérer des atomes de lithium, tel que le graphite ou du silicium, un oxyde de titane lithié LTO (par exemple de formule Li₄Ti₅O₁₂) ou un oxyde de titane et de niobium TNO (par exemple de formule TiNb₂O₇). La seconde électrode de la seconde polarité 26 est par exemple l'électrode négative.

L'élément électrochimique 10 comprend un séparateur, séparant la première électrode 22 de la seconde électrode 26. Dans le cas d'une cellule électrochimique Lithium-Ion, le séparateur est perméable aux ions de Lithium, mais isolant électriquement. Le séparateur est par exemple une membrane en polyoléfine.

La première électrode de la première polarité 22 et la seconde électrode de la seconde polarité 26 s'étendent généralement parallèlement au plan médian PM.

L'élément électrochimique 10 comprend également un électrolyte, qui peut être liquide, tel qu'un électrolyte organique contenant des sels de lithium comme le LiPF₆, solide ou gel, tel que des polymères de Polyfluorure de vinylidène (PVDF) ou un copolymère de Polyfluorure de vinylidène et d'Hexafluoropropylène (PVDF-HFP).

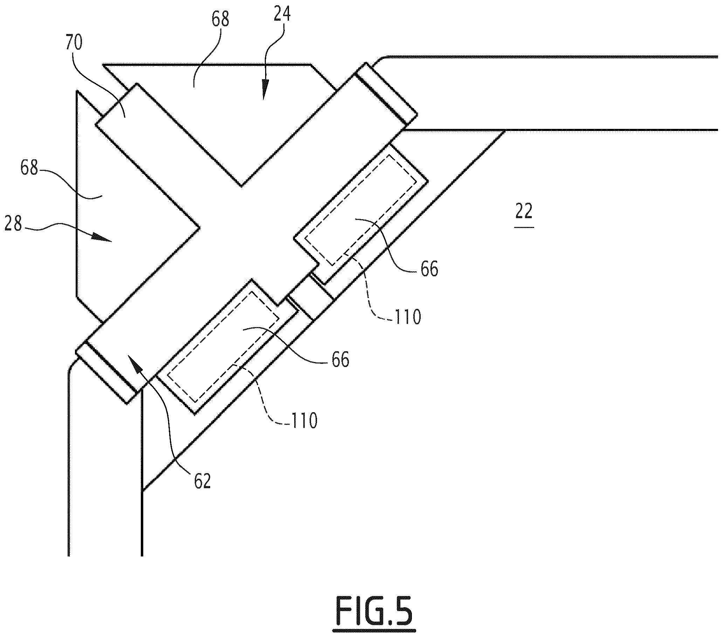

Le premier organe de connexion de la première polarité 24 est relié électriquement à la première borne 14 et le second organe de connexion de la seconde polarité 28 est relié électriquement à la seconde borne 16. Les organes de connexion sont adaptés pour collecter le courant de l'électrode associée. Le ou chaque premier organe de connexion de la première polarité 24 est fixé par soudage ou brasage au collecteur de courant associé ou à l'électrode associée. De même, le ou chaque second organe de connexion de la seconde polarité 28 est fixé par soudage ou brasage au collecteur de courant associé ou à l'électrode associée. En particulier, le ou chaque premier organe de connexion de la première polarité 24 est fixé par soudage par ultrasons au collecteur de courant associé ou à l'électrode associée. De même, en particulier le ou chaque second organe de connexion de la seconde polarité 28 est fixé par soudage par ultrasons au collecteur de courant associé ou à l'électrode associée. Ceci est illustré par les zones de soudage par ultrasons 110 sur la Figure 5. Le soudage par ultrasons est particulièrement avantageux car il permet de relier des feuilles de faible épaisseur.

Dans le présent mode de réalisation, l'élément électrochimique 10 comprend exactement un seul premier organe de connexion de la première polarité 24 et un seul second organe de connexion de la seconde polarité 28. En d'autres termes, les organes de connexion de l'élément électrochimique sont constitués par un seul premier organe de connexion de la première polarité et un seul second organe de connexion de la seconde polarité.

L'élément électrochimique 10 ou chaque élément électrochimique 10 comprend une enveloppe 40 munie d'une première paroi 42 et d'une seconde paroi 44. L'enveloppe 40 est du type « pouch », c'est-à-dire comprend des parois relativement souples et facilement déformables. Les parois de l'enveloppe 40 sont donc plus facilement déformables et moins rigides que les parois du carter 4.

Sur la Figure 3 est représenté l'élément électrochimique 10 en coupe selon la ligne III-III de la Figure 1. Le carter 4 est omis sur la Figure 3.

La première paroi 42 et la seconde paroi 44 comprennent chacune une feuille en métal, notamment en aluminium, dont chacune a une épaisseur EF comprise entre 20 µm et 150 µm, notamment entre 30 µm et 60 µm. Alternativement, l'épaisseur EF peut être comprise avantageusement entre 60 µm et 100 µm ou entre 60 µm et 90 µm. La première paroi 42 et la seconde paroi 44 peuvent comprendre en outre un revêtement, par exemple en matière thermoplastique, disposé sur la feuille en métal. Par exemple, les parois de l'enveloppe sont formées d'un film multicouches comprenant, de l'extérieur vers l'intérieur, une couche électriquement isolante et mécaniquement protectrice, une feuille en aluminium et une couche de polypropylène (PP) et/ou de polypropylène modifié chimiquement (PPa - acid modified polypropylen). De préférence, les parois de l'enveloppe sont formées d'un film multicouches comprenant, de l'extérieur vers l'intérieur, une couche de Polyéthylène téréphtalate (PET), une couche de Nylon, une feuille en aluminium et une couche de polypropylène (PP) et/ou de polypropylène modifié chimiquement (PPa - acid modified polypropylen).

Comme visible sur la Figure 1, l'enveloppe 40 comprend deux premiers bords 48, en l'occurrence sensiblement parallèles l'un de l'autre, et deux seconds bords 50, en l'occurrence sensiblement parallèles l'un de l'autre, et en l'occurrence sensiblement perpendiculaires aux premiers bords. En l'occurrence, chacun des premiers bords 48 est un bord long et chacun des seconds bords 50 est un bord court. Le terme « court » signifie que le bord est plus court que chacun des bords longs et le terme « long » signifie que le bord est plus long que chacun des bords courts. Les premiers bords 48 sont par exemple des bords opposés l'un de l'autre et les seconds bords 50 sont par exemple également des bords opposés l'un de l'autre. Les premiers et/ou les seconds bords 48 et 50 peuvent être sensiblement rectilignes.

En variante, les premiers et/ou les seconds bords 48 et 50 ne sont pas parallèles, et forment par exemple un trapèze. En variante, les premiers et/ou les seconds bords 48 et 50 ne sont pas de longueur différente, mais de longueur identique et forment donc par exemple un carré ou un losange. En variante, l'enveloppe 40 comprend au moins un premier bord et un second bord non-parallèles, de préférence sensiblement perpendiculaires l'un de l'autre, qui forment ensemble un coin.

Ces premiers et seconds bords 48 et 50 forment, vue de face, généralement un quadrilatère enveloppant RE, en l'occurrence un rectangle enveloppant (Figure 1), qui est défini par les premiers et seconds bords 48 et 50 et par la prolongation de ces bords. Les bords 48 et 50 coïncident avec le quadrilatère enveloppant. Le quadrilatère enveloppant RE comprend quatre coins C1, C2, C3, et C4. Les quatre coins C1 à C4 sont disposés dans le sens horaire sur les Figures. En fonction de la longueur des premiers et seconds bords 48 et 50 et de leur disposition, le quadrilatère enveloppant RE peut également être un quadrilatère quelconque, un carré, un losange ou un trapèze. En variante encore, le quadrilatère enveloppant RE est remplacé par une forme géométrique enveloppante ayant au moins un coin, par exemple une forme de demi-cercle.

Le premier organe de connexion de la première polarité 24 est disposé dans un premier coin du quadrilatère enveloppant RE, en l'occurrence C1, et le second organe de connexion de la seconde polarité 28 est disposé également dans le premier coin du quadrilatère enveloppant, en l'occurrence C1. Le premier organe de connexion de la première polarité 24 et le second organe de connexion de la seconde polarité 28 sont donc disposés dans le même coin du quadrilatère enveloppant RE. Le premier organe de connexion de la première polarité 24 et le second organe de connexion de la seconde polarité 28 sont donc situés plus proche de ce coin C1 que d'autres coins C2 à C4.

Dans le cas présent, dans un seul coin de la forme géométrique enveloppante ou du quadrilatère enveloppant est disposé un organe de connexion de la première polarité et est disposé un organe de connexion de la seconde polarité. Dans aucun autre coin présent de la forme géométrique enveloppante ou du quadrilatère enveloppant RE est disposé un organe de connexion de l'élément électrochimique.

Selon le mode de réalisation des Figures 1 à 8, la feuille en métal de la première paroi 42 et la feuille en métal de la seconde paroi 44 sont deux feuilles de base 52 en métal individuelles et séparées dont chacune comporte quatre chants. Chacun des premiers bords 48 et des second bords 50 est formé par deux chants ou zones de chant des deux feuilles de base superposés et fixés l'un à l'autre, par exemple par soudage par laser ou par thermo-soudage. Ceci est montré sur la Figure 3. L'enveloppe 40 comprend donc quatre côtés formés par une ligne de fixation, notamment une ligne de soudure.

Selon l'invention, vu de face, le premier organe de connexion de la première polarité 24 est disposé entièrement à l'intérieur du quadrilatère enveloppant RE. Par ailleurs, vu de face, le second organe de connexion de la seconde polarité 28 est disposé entièrement à l'intérieur du quadrilatère enveloppant RE. En d'autres termes, les premier et second terminaux 24, 28 sont disposés entièrement à l'intérieur d'un cylindre ayant une section du quadrilatère enveloppant RE.

Chaque premier organe de connexion de la première polarité 24 et/ou chaque second organe de connexion de la seconde polarité 28 a des bords qui, vue de face, sont en retrait par rapport à celui-ci, c'est-à-dire s'étendent complètement à l'intérieur du quadrilatère enveloppant RE. Ceci est avantageux, car lors de la mise en module un contact non souhaité entre les organes de connexion et le casing est évité. En variante, ces bords coïncident avec le quadrilatère enveloppant RE.

Sur la Figure 2 est représenté l'élément électrochimique 10 de la Figure 1, également vue de face, mais la première paroi 42 de l'enveloppe 40 étant omise.

L'organe de connexion de la première polarité 24 est constitué d'une languette d'organe de connexion (dénommé « tab » en anglais) qui est fixée à une superposition de feuilles d'électrode. De même, chaque second organe de connexion de la seconde polarité 28 est constitué d'une languette d'organe de connexion qui est fixée à une superposition de feuilles d'électrode.

Chacune des languettes d'organe de connexion comprend une feuille en métal et éventuellement un revêtement. La languette d'organe de connexion du premier organe de connexion de la première polarité 24 est par exemple en aluminium. La languette d'organe de connexion du second organe de connexion de la seconde polarité 28 est par exemple en cuivre et éventuellement revêtue de nickel.

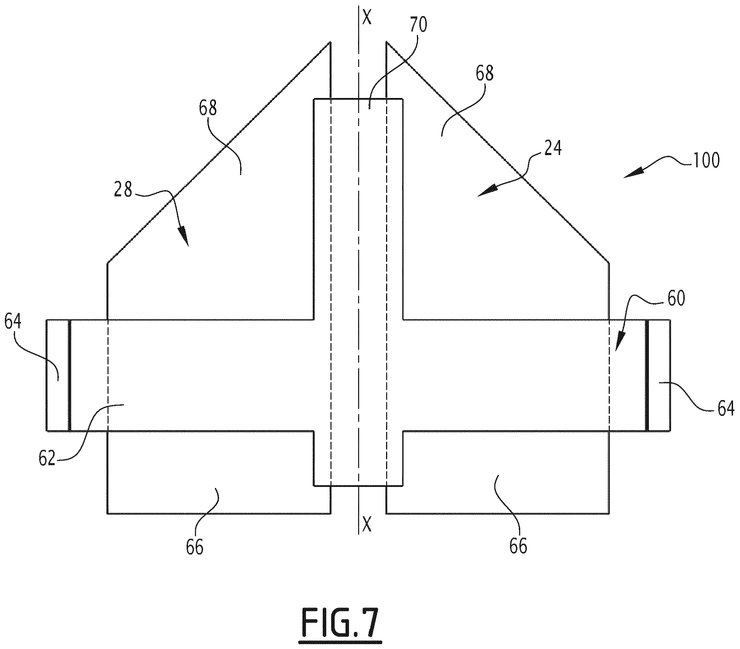

Chacune des languettes d'organe de connexion a une forme de trapèze (voir Figure 7). Chaque trapèze comprend deux bases de trapèze parallèles. Chaque trapèze comprend un premier bord latéral de trapèze, qui est sensiblement perpendiculaire aux bases de trapèze. Chaque trapèze comprend un second bord latéral de trapèze qui est oblique par rapport aux bases de trapèze.

Le second bord latéral de trapèze est parallèle à ou peut coïncider avec le bord associée 48 ou 50 de l'enveloppe 40. Les deux seconds bords latéraux de trapèze des deux languettes de l'organe de connexion adjacentes forment entre eux un angle de par exemple 90°.

Les deux bases de trapèze des deux languettes d'organe de connexion sont parallèles les unes aux autres.

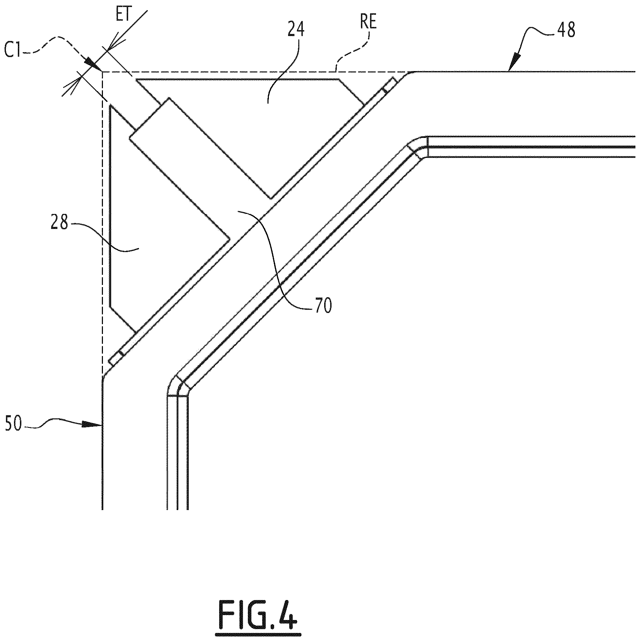

Le premier organe de connexion de la première polarité 24 et le second organe de connexion de la seconde polarité 28 sont disposés côte-à-côte. De plus, le premier organe de connexion de la première polarité 24 et le second organe de connexion de la seconde polarité 28 sont disposés d'une manière coplanaire l'un par rapport à l'autre dans le plan médian PM ou dans un plan parallèle au plan médian PM. Egalement, le premier organe de connexion de la première polarité 24 et le second organe de connexion de la seconde polarité 28 sont disposés à l'écart l'un de l'autre selon le plan médian PM, sans chevauchement. L'écart des organes de connexion est référencé ET sur la Figure 4.

L'élément électrochimique 10 comprend un élément de liaison 60 qui maintient le premier organe de connexion de la première polarité 24 et le second organe de connexion de la seconde polarité 28 ensemble dans une configuration déterminée, et qui isole électriquement le premier organe de connexion de la première polarité 24 du second organe de connexion de la seconde polarité 28.

A cet effet, l'élément de liaison 60 est en matière plastique, notamment en matière thermoplastique, tel que du polypropylène ou polyéthylène. De préférence, l'élément de liaison 60 est surmoulé autour du premier organe de connexion de la première polarité 24 et du second organe de connexion de la seconde polarité 28.

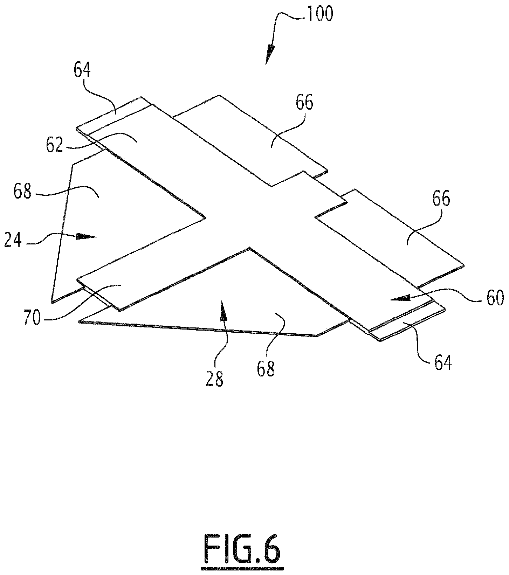

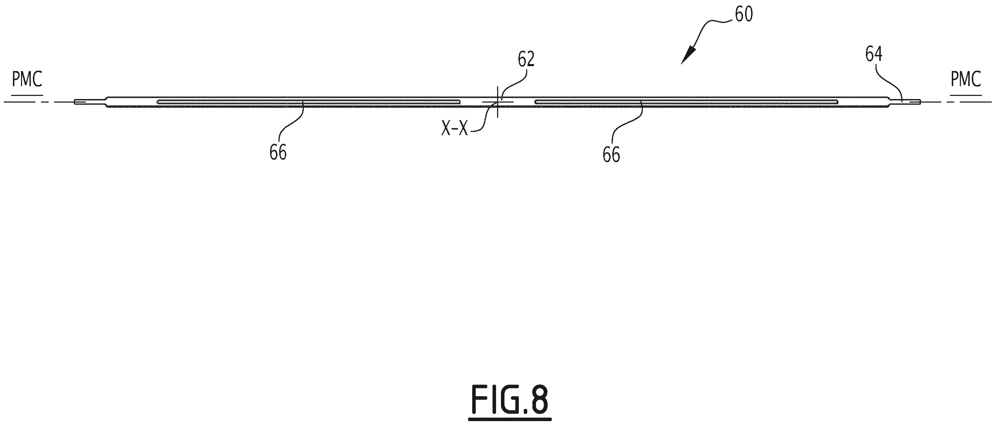

L'élément de liaison 60, le premier organe de connexion de la première polarité 24 et le second organe de connexion de la seconde polarité 28 constituent ensemble un ensemble de connexion 100 qui peut être manipulé d'un seul bloc. L'ensemble de connexion 100 de l'élément électrochimique des Figures 1 à 5 est représenté sur les Figures 6 à 8. Cet ensemble de connexion 100 est un ensemble selon un premier mode de réalisation. L'ensemble de connexion 100 définit un plan PMC (Figure 8), qui à l'état assemblé de l'élément électrochimique, coïncide avec le plan médian PM. L'ensemble de connexion 100 définit également un axe central X-X, qui s'étend dans le plan PMC et qui est un axe de symétrie de l'ensemble de connexion 100.

L'élément de liaison 60 comprend une portion de maintien 62 qui entoure une circonférence du premier organe de connexion de la première polarité 24 et une circonférence du second organe de connexion de la seconde polarité 28. La portion de maintien 62 est en l'occurrence essentiellement une barre de profil rectangulaire.

L'élément de liaison 60 est muni de deux ailes 64, chacune disposée à une extrémité de la portion de maintien 62 et ayant une épaisseur plus faible que l'épaisseur de la portion de maintien. A l'état assemblé de l'élément électrochimique 10, les ailes 64 forment des joints de liaison avec la première paroi 42 et la seconde paroi 44.

Chacun du premier organe de connexion de la première polarité 24 et du second organe de connexion de la seconde polarité 28 comporte une portion d'électrode 66 et une portion de borne 68. La portion de borne 68 a une forme sensiblement triangulaire. En l'occurrence, la portion d'électrode 66 comprend le premier bord latéral du trapèze de la languette d'organe de connexion et la portion de borne 68 comprend le second bord latéral du trapèze de la languette d'organe de connexion.

La portion de borne 68 est adaptée et destinée à être connectée électriquement à la borne associée 14 ou 16 et la portion d'électrode 66 est adaptée et destinée à être connectée électriquement à l'électrode associée 22, 26.

La portion de maintien 62 définit une frontière entre la portion d'électrode 66 et la portion de borne 68 de chaque organe de connexion 24, 28.

L'élément de liaison 60 est avantageusement muni d'une portion entretoise 70, qui s'étend depuis la portion de maintien 62 le long d'une base de trapèze de la languette d'organe de connexion de la première polarité et le long d'une base de trapèze de la languette d'organe de connexion de la seconde polarité. La portion entretoise 70 enrobe le bord de chaque languette d'organe de connexion et s'étend de part et d'autre du plan médian PM. La portion entretoise 70 a une longueur inférieure à la longueur de la base de trapèze associée. La portion entretoise 70 contribue à isoler électriquement le premier organe de connexion de la première polarité 24 et le second organe de connexion de la seconde polarité 28 par un maintien de la distance physique.

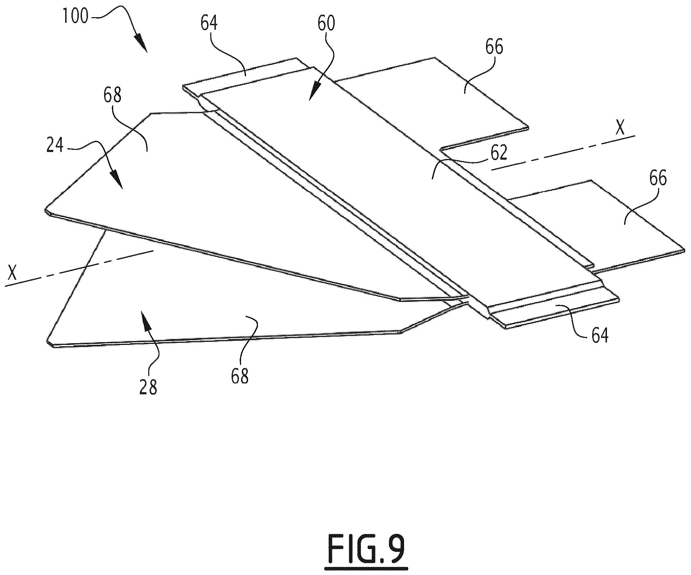

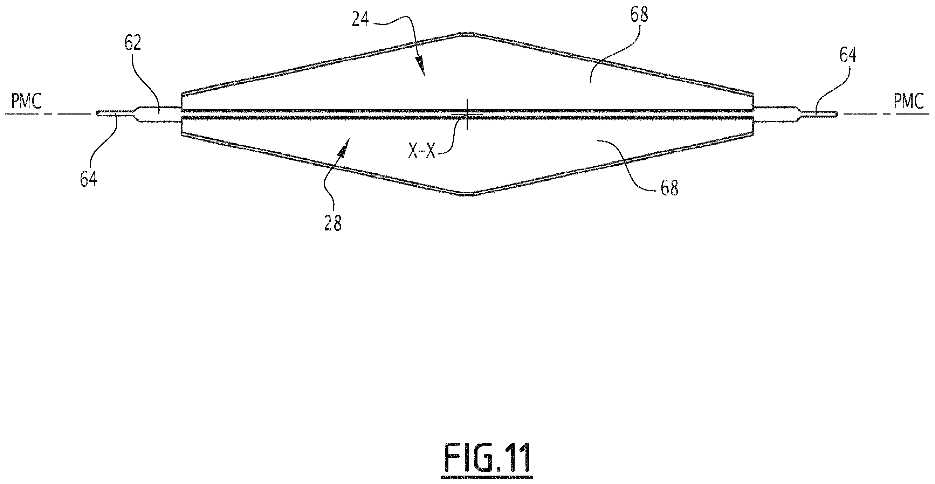

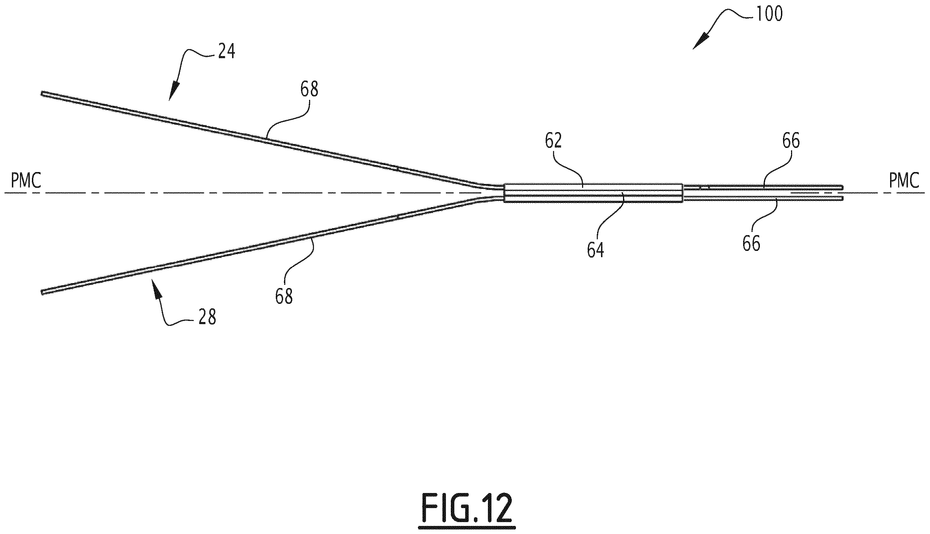

Sur les Figures 9 à 12 est représenté un ensemble de connexion 100 selon un second mode de réalisation. Ce mode de réalisation diffère du premier mode de réalisation uniquement par ce qui suit. Les éléments analogues portent des références identiques.

Le premier organe de connexion de la première polarité 24 et le second organe de connexion de la seconde polarité 28 ne sont pas disposés côte-à-côte selon le plan médian PM, mais se chevauchent ou sont juxtaposés.

De plus, le premier organe de connexion de la première polarité 24 et le second organe de connexion de la seconde polarité 28 sont disposés de part et d'autre du plan médian PM, respectivement du plan PMC.

La portion de borne 68 de chacun du premier organe de connexion de la première polarité 24 et du second organe de connexion de la seconde polarité 28 a une forme sensiblement de triangle isocèle. Le sommet du triangle isocèle coïncide avantageusement avec le coin C1 associé ou est le point de chaque organe de connexion le plus près de ce coin C1.

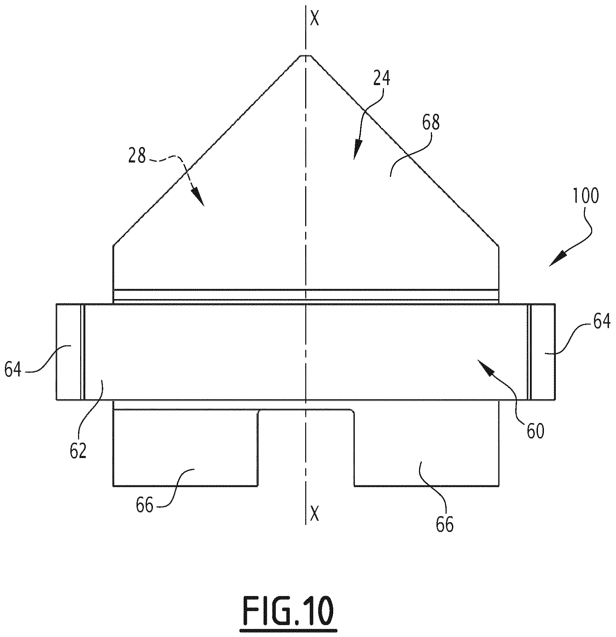

La portion de borne 68 du premier organe de connexion de la première polarité 24 et la portion de borne 68 du second organe de connexion de la seconde polarité 28 ont des formes identiques et, vu perpendiculairement au plan PMC (voir Figure 10), coïncident.

La portion d'électrode 66 de chacun du premier organe de connexion de la première polarité 24 et du second organe de connexion de la seconde polarité 28 a une forme sensiblement rectangulaire et une largeur, mesurée perpendiculairement à l'axe X-X et parallèlement au plan PMC, inférieure à la moitié de la largeur de la base du triangle isocèle de la portion de borne 68.

De plus, la portion d'électrode 66 du premier organe de connexion de la première polarité 24 et la portion d'électrode 66 du second organe de connexion de la seconde polarité 28 sont décalées l'une de l'autre dans le plan PMC de telle sorte à ne pas se chevaucher (voir Figure 10). Ainsi, la connexion de chacune des portions d'électrode 66 à l'électrode associée est facile.

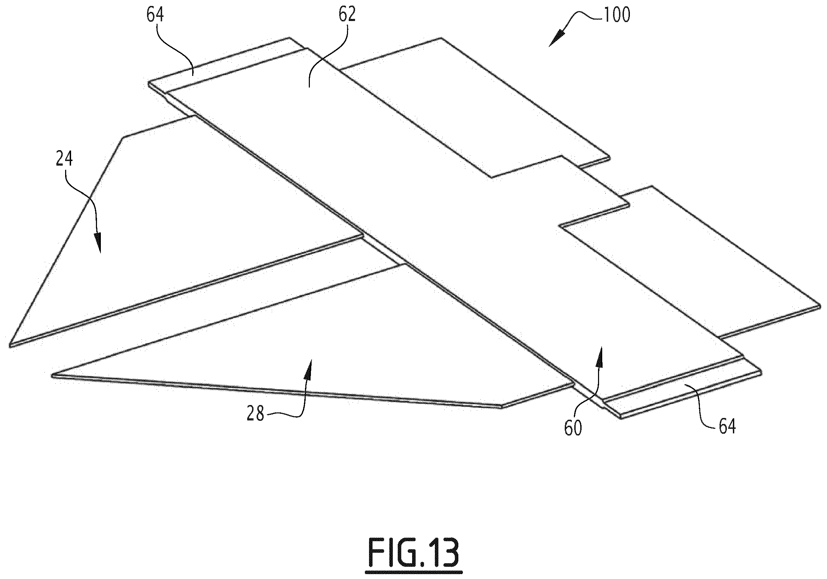

Sur la Figure 13 est représenté un ensemble de connexion 100 selon un troisième mode de réalisation. Ce mode de réalisation diffère du premier mode de réalisation uniquement par ce qui suit. Les éléments analogues portent des références identiques.

L'élément de liaison 60 ne comprend pas de portion entretoise 70.

L'isolation électrique entre le premier organe de connexion de la première polarité 24 et le second organe de connexion de la seconde polarité 28 est donc assurée majoritairement par la distance entre les deux languettes. L'avantage de ce mode de réalisation est d'avoir des languettes plus flexibles pour connecter plusieurs pouchs, notamment dans le cas de pouch épais (épaisseur totale supérieure à 5 mm).

Le fait de placer les organes de connexion dans les coins de la cellule permet de réduire la zone inactive des électrodes nécessaire pour la connexion et de maximiser les zones enduites par le mélange de matière active des électrodes. Regrouper deux organes de connexion en un coin, permet encore d'augmenter les zones actives des électrodes. Par rapport à un design conventionnel avec des organes de connexion opposés, on peut estimer un gain de 6.5% en énergie, pour une surface projetée identique.

De plus, le fait de placer les organes de connexion dans un coin permet d'intégrer la surface des organes de connexion dans l'empreinte totale de la cellule et par conséquent de faciliter son intégration en module en donnant la possibilité de ne pas plier les organes de connexion pour connecter les cellules entre elles. Avec un design conventionnel, le pliage des organes de connexion pour la connexion inter cellules est nécessaire si l'on souhaite minimiser l'encombrement de la cellule. Cela provoque une manipulation supplémentaire lors de l'assemblage du module ainsi que la fragilisation de ces organes de connexion.

Un autre avantage réside dans le fait que l'intégration des deux organes de connexion en un seul emplacement permet de réduire le nombre de thermosoudures et donc les potentielles zones de fuites. Cela augmentera en conséquence la fiabilité de l'étanchéité de la cellule.

En variante, non-représentée, l'élément électrochimique 10 comprend un troisième organe de connexion de la première polarité et un quatrième organe de connexion de la seconde polarité et ces organes de connexion sont disposés dans un coin du quadrilatère enveloppant différent du premier coin C1 et notamment dans un coin opposé au premier coin C1. Par exemple, le troisième organe de connexion de la première polarité et le quatrième organe de connexion de la seconde polarité sont disposés dans le coin C3.

En variante encore, non-représentée, l'élément électrochimique 10 au lieu de comprendre un élément de liaison 60 qui relie le premier organe de connexion de la première polarité 24 et le second organe de connexion de la seconde polarité 28, comprend deux éléments de liaison 60 séparés dont chacun entoure un seul des terminaux 24, 28, et qui sont reliés par l'intermédiaire des parois 42, 44.

## Revendications

1. Elément électrochimique pour batterie, du type comprenant
- une première électrode d'une première polarité (22),
- un premier organe de connexion de la première polarité (24),
- une seconde électrode d'une seconde polarité (26),
- un second organe de connexion de la seconde polarité (28),
- une enveloppe (40) comprenant une première paroi (42) et une seconde paroi (44),
- l'enveloppe comprenant au moins un premier bord (48) et au moins un second bord (50),
le(s) premier(s) et second(s) bords formant une forme géométrique enveloppante (RE) ayant au moins un coin (C1),
**caractérisé en ce que**
le premier organe de connexion de la première polarité (24) et le second organe de connexion de la seconde polarité (28) sont disposés entièrement à l'intérieur de la forme géométrique enveloppante (RE), **en ce que**
le premier organe de connexion de la première polarité est disposé dans un premier coin (C1) de la forme géométrique enveloppante et
le second organe de connexion de la seconde polarité est disposé également dans le premier coin (C1) de la forme géométrique enveloppante.

2. Elément électrochimique selon la revendication 1, dans lequel la forme géométrique enveloppante (RE) est un quadrilatère enveloppant, notamment un rectangle ou un trapèze.

3. Elément électrochimique selon la revendication 1 ou 2, dans lequel exclusivement dans un seul coin (C1) de la forme géométrique enveloppante (RE) est disposé un organe de connexion de la première polarité (24) et est disposé un organe de connexion de la seconde polarité (28) et dans aucun autre coin éventuellement présent de la forme géométrique enveloppante (RE) est disposé un organe de connexion de l'élément électrochimique.

4. Elément électrochimique selon l'une quelconque des revendications précédentes, dans lequel
le premier organe de connexion de la première polarité (24) et le second organe de connexion de la seconde polarité (28) sont disposés côte-à-côte ou dans lequel le premier organe de connexion de la première polarité (24) et le second organe de connexion de la seconde polarité (28) sont juxtaposés.

5. Elément électrochimique selon l'une quelconque des revendications précédentes, dans lequel le premier organe de connexion de la première polarité comporte une portion de borne (68) et/ou dans lequel le second organe de connexion de la seconde polarité comporte une portion de borne (68), dans lequel chaque portion de borne (68) est adaptée à être connectée électriquement à une borne (14, 16) associée et dans lequel chaque portion de borne à une forme sensiblement triangulaire.

6. Elément électrochimique selon l'une quelconque des revendications précédentes, dans lequel l'élément électrochimique (10) comprend un élément de liaison (60) en matière plastique qui maintient le premier organe de connexion de la première polarité et le second organe de connexion de la seconde polarité ensemble dans une configuration déterminée et qui isole électriquement le premier organe de connexion de la première polarité (24) du second organe de connexion de la seconde polarité (28).

7. Elément électrochimique selon la revendication 6, dans lequel l'élément de liaison (60) est surmoulé autour du premier organe de connexion de la première polarité (24) et du second organe de connexion de la seconde polarité (28).

8. Elément électrochimique selon l'une quelconque des revendications précédentes, dans lequel le premier organe de connexion de la première polarité (24) et/ou le second organe de connexion de la seconde polarité (28) est ou sont fixés à leur électrode respective notamment par soudage par ultrasons.

9. Elément électrochimique selon l'une quelconque des revendications précédentes, dans lequel la première paroi (42) et la seconde paroi (44) comprennent chacune une feuille de base en métal et dans lequel les feuilles de base en métal ont chacune une épaisseur (EF) comprise entre 20 µm et 150 µm, notamment soit entre 30 µm et 60 µm soit entre 60 µm et 100 µm ou entre 60 µm et 90 µm,

10. Batterie, notamment batterie Lithium-Ion, comprenant un carter et au moins un élément électrochimique, la batterie comprenant de préférence une première borne (14) et une seconde borne (16), **caractérisée en ce que** l'au moins un élément électrochimique (10) est un élément selon l'une quelconque des revendications précédentes, et **en ce que** de préférence le premier organe de connexion de la première polarité (24) est relié électriquement à la première borne (14) et le second organe de connexion de la seconde polarité (28) est relié électriquement à la seconde borne (16).

## Patentansprüche

1. Elektrochemische Zelle für eine Batterie des Typs, der Folgendes umfasst
- eine erste Elektrode einer ersten Polarität (22),
- ein erstes Verbindungsglied der ersten Polarität (24),
- eine zweite Elektrode einer zweiten Polarität (26),
- ein zweites Verbindungsglied der zweiten Polarität (28),
- eine Hülle (40), umfassend eine erste Wand (42) und eine zweite Wand (44),
- die Hülle umfassend mindestens einen ersten Rand (48) und mindestens einen zweiten Rand (50),
wobei der/die erste(n) und zweite(n) Rand/Ränder eine umhüllende geometrische Form (RE) bilden, die mindestens eine Ecke (C1) aufweist,
**dadurch gekennzeichnet, dass**
das erste Verbindungsglied der ersten Polarität (24) und das zweite Verbindungsglied der zweiten Polarität (28) vollständig innerhalb der umhüllenden geometrischen Form (RE) angeordnet sind, dadurch, dass
das erste Verbindungsglied der ersten Polarität in einer ersten Ecke (C1) der umhüllenden geometrischen Form angeordnet ist, und
das zweite Verbindungsglied der zweiten Polarität auch in der ersten Ecke (C1) der umhüllenden geometrischen Form angeordnet ist.

2. Elektrochemisches Element nach Anspruch 1, wobei die umhüllende geometrische Form (RE) ein umhüllendes Viereck ist, insbesondere ein Rechteck oder ein Trapez.

3. Elektrochemisches Element nach Anspruch 1 oder 2, wobei ausschließlich in einer einzigen Ecke (C1) der umhüllenden geometrischen Form (RE) ein Verbindungsglied der ersten Polarität (24) angeordnet ist und ein Verbindungsglied der zweiten Polarität (28) angeordnet ist und in keiner weiteren Ecke, die gegebenenfalls vorhanden ist, der umhüllenden geometrischen Form (RE) ein Verbindungsglied des elektrochemischen Elements angeordnet ist.

4. Elektrochemisches Element nach einem der vorherigen Ansprüche, wobei das erste Verbindungsglied der ersten Polarität (24) und das zweite Verbindungsglied der zweiten Polarität (28) Seite an Seite angeordnet sind oder wobei
das erste Verbindungsglied der ersten Polarität (24) und das zweite Verbindungsglied der zweiten Polarität (28) nebeneinander angeordnet sind.

5. Elektrochemisches Element nach einem der vorherigen Ansprüche, wobei das erste Verbindungsglied der ersten Polarität einen Anschlussabschnitt (68) umfasst und/oder wobei das zweite Verbindungsglied der zweiten Polarität einen Anschlussabschnitt (68) umfasst, wobei jeder Anschlussabschnitt (68) angepasst ist, um elektrisch mit einem assoziierten Anschluss (14, 16) verbunden zu werden, und wobei jeder Anschlussabschnitt eine im Wesentlichen dreieckige Form aufweist.

6. Elektrochemisches Element nach einem der vorherigen Ansprüche, wobei das elektrochemische Element (10) ein Verbindungselement (60) aus Kunststoff umfasst, das das erste Verbindungsglied der ersten Polarität und das zweite Verbindungsglied der zweiten Polarität in einer bestimmten Konfiguration zusammenhält und das erste Verbindungsglied der ersten Polarität (24) von dem zweiten Verbindungsglied der zweiten Polarität (28) elektrisch isoliert.

7. Elektrochemisches Element nach Anspruch 6, wobei das Verbindungselement (60) um das erste Verbindungsglied der ersten Polarität (24) und das zweite Verbindungsglied der zweiten Polarität (28) herum geformt ist.

8. Elektrochemisches Element nach einem der vorherigen Ansprüche, wobei das erste Verbindungsglied der ersten Polarität (24) und/oder das zweite Verbindungsglied der zweiten Polarität (28) an ihrer jeweiligen Elektrode insbesondere durch Ultraschallschweißen befestigt ist bzw. sind.

9. Elektrochemisches Element nach einem der vorherigen Ansprüche, wobei die erste Wand (42) und die zweite Wand (44) jeweils eine Metallbasisfolie umfassen und wobei die Metallbasisfolien jeweils eine Stärke (EF) zwischen 20 µm und 150 µm, insbesondere entweder zwischen 30 µm und 60 µm oder zwischen 60 µm und 100 µm oder zwischen 60 µm und 90 µm, aufweisen.

10. Batterie, insbesondere Lithium-Ionen-Batterie, umfassend ein Gehäuse und mindestens ein elektrochemischen Element, die Batterie vorzugsweise umfassend einen ersten Anschluss (14) und einen zweiten Anschluss (16), **dadurch gekennzeichnet, dass** das mindestens eine elektrochemische Element (10) ein Element nach einem der vorherigen Ansprüche ist, und dass vorzugsweise das erste Verbindungsglied der ersten Polarität (24) elektrisch mit dem ersten Anschluss (14) verbunden ist und das zweite Verbindungsglied der zweiten Polarität (28) elektrisch mit dem zweiten Anschluss (16) verbunden ist.

## Claims

1. An electrochemical element for a battery, of the type comprising
- a first electrode of a first polarity (22),
- a first connection member of the first polarity (24),
- a second electrode of a second polarity (26),
- a second connection member of the second polarity (28),
- an envelope (40) comprising a first wall (42) and a second wall (44),
- the envelope comprising at least one first edge (48) and at least one second edge (50),
the first and second edges forming an enveloping geometric shape (RE) having at least one corner (C1),
**characterized in that**
the first connection member of the first polarity (24) and the second connection member of the second polarity (28) are arranged completely within the enveloping geometric shape (RE), **in that**
the first connection member of the first polarity is arranged in a first corner (C1) of the enveloping geometric shape and
the second connection member of the second polarity is also arranged in the first corner (C1) of the enveloping geometric shape.

2. The electrochemical element according to Claim 1, wherein the enveloping geometric shape (RE) is an enveloping quadrilateral, in particular a rectangle or a trapezoid.

3. The electrochemical element according to claim 1 or 2, wherein exclusively a connection member of the first polarity (24) and a connection member of the second polarity (28) are arranged in only one corner (C1) of the enveloping geometric shape (RE) and in no other corner of the enveloping geometric shape (RE), which may be present, is a connection member of the electrochemical element arranged.

4. The electrochemical element according to any of the preceding claims, wherein the first connection member of the first polarity (24) and the second connection member of the second polarity (28) are arranged side-by-side or wherein
the first connection member of the first polarity (24) and the second connection member of the second polarity (28) are juxtaposed.

5. The electrochemical element according to any of the preceding claims, wherein the first connection member of the first polarity includes a terminal portion (68) and/or wherein the second connection member of the second polarity includes a terminal portion (68), wherein each terminal portion (68) is suitable for being electrically connected to an associated terminal (14, 16) and wherein each terminal portion has a substantially triangular shape.

6. The electrochemical element according to any of the preceding claims, wherein the electrochemical element (10) comprises a linking element (60) of plastic material which holds together the first connection member of the first polarity and the second connection member of the second polarity in a predetermined configuration and electrically isolates the first connection member of the first polarity (24) from the second connection member of the second polarity (28).

7. The electrochemical element according to claim 6, wherein the connection member (60) is overmolded around the first connection member of the first polarity (24) and of the second connection member of the second polarity (28).

8. The electrochemical element according to any of the preceding claims, wherein the first connection member of the first polarity (24) and/or the second connection member of the second polarity (28) is or are attached to the respective electrodes thereof, in particular by ultrasonic welding.

9. The electrochemical element according to any of the preceding claims, wherein the first wall (42) and the second wall (44) each comprise a metal base sheet and wherein the metal base sheets each have a thickness (EF) comprised between 20 µm to 150 µm, in particular either between 30 µm and 60 µm or between 60 µm and 100 µm or between 60 µm and 90 µm.

10. A battery, in particular a Lithium-Ion battery, comprising a housing and at least one electrochemical element, the battery preferentially comprising a first terminal (14) and a second terminal (16), **characterized in that** the at least one electrochemical element (10) is an element according to any of the preceding claims and **in that**, preferentially, the first connection member of the first polarity (24) is electrically connected to the first terminal (14) and the second connection member of the second polarity (28) is electrically connected to the second terminal (16).
